# EUROPÄISCHE PATENTSCHRIFT

(11) **EP 2 913 145 B1**
(45) Veröffentlichungstag und Bekanntmachung des Hinweises auf die Patenterteilung: **22.03.2017**
(21) Anmeldenummer: 15151759.6
(22) Anmeldetag: 20.01.2015
(51) Int. Cl.: B23P 9/00, B24B 39/00, C21D 7/10

(54) **Werkzeug zum Bearbeiten einer Vertiefung in einem Werkstück**
Tool for machining a recess in a workpiece
Outil destiné à usiner un évidemment dans une pièce

(30) Priorität: 28.02.2014 DE 202014100933 U
(43) Veröffentlichungstag der Anmeldung: 02.09.2015
(73) Patentinhaber: Carl Rehfuss GmbH + Co. KG, 72461 Albstadt (DE)
(72) Erfinder: Fink, Martin, 72461 Albstadt (DE)
(74) Vertreter: Mammel und Maser

(56) Entgegenhaltungen:
- EP-A1- 0 104 694
- DE-A1- 3 621 422
- DE-A1-102004 025 622
- GB-A- 568 645
- JP-A- H08 294 733
- JP-A- H09 216 019
- DATABASE WPI Week 198112 Thomson Scientific, London, GB; AN 1981-C5602D XP002740456, -& SU 747 598 A1 (MOGIL CAR WKS) 18. Juli 1980 (1980-07-18)
- DATABASE WPI Week 198450 Thomson Scientific, London, GB; AN 1984-310637 XP002740457, -& SU 1 085 709 A (NATAPOV L M) 15. April 1984 (1984-04-15)

## Beschreibung

Die Erfindung betrifft ein Werkzeug und ein Verfahren zur Bearbeitung einer Passfedernut in einem Werkstück, auf ein Endmaß, wobei die Passfedernut an einer Durchbrechung in dem Werkstück vorgesehen ist.

Aus der DE 10 2004 025 622 A1 ist eine Vorrichtung zur Bearbeitung einer Vertiefung in einem Werkstück bekannt, durch welche insbesondere Passfedernuten in einem gehärteten Werkstück auf ein Endmaß bearbeitet werden. Hierzu ist eine Zugstange vorgesehen, welche eine Kassette mit mehreren Schneiden aufnimmt, um durch eine spanende Bearbeitung Seitenflächen beziehungsweise Passflächen der Passfedernut zu bearbeiten. Diese Bearbeitung weist den Nachteil auf, dass ein kostenintensives Werkzeug eingesetzt wird. Darüber hinaus wird aufgrund der spanenden Bearbeitung der gehärteten Oberfläche die Maßhaltigkeit der Passfedernut nicht gewährleistet.

Aus der SU 747 598 B ist ein Werkzeug zum Einbringen von gewindeförmigen Vertiefungen für ein Flüssigkeitslager bekannt. Dieses Werkzeug weist einen Grundkörper sowie eine Hülse auf, wobei zwischen der Hülse und dem Grundkörper Kugeln geführt sind. In der Hülse sind radial nach außen weisende Stifte vorgesehen, welche durch die Kugeln radial nach außen bewegt werden, sofern die Kugeln mit Luft beaufschlagt werden.

Aus der JP H08-294733 A ist ein Werkzeug mit einem Dorn bekannt, welcher einen Stift aufweist, der sich beidseitig radial gegenüber der Mantelfläche nach außen erstreckt. Dieses Werkzeug dient zum Einbringen von Vertiefungen in eine Bohrung für ein Fluidlager. Hierzu weist der Stift, der mit seinen beiden Enden gegenüber der Mantelfläche des Dorns radial hervorragt, entsprechende Stirnflächen zum Einbringen der Vertiefungen auf.

Durch die JP H09216019 A wird ein analoges Werkzeug wie das zuvor beschriebene Werkzeug offenbart.

Aus der EP 0 104 694 A1 ist ein Verfahren und ein Werkzeug zur Einbringung einer spiralförmigen Vertiefung für eine Fluidlagerung bekannt. Mehrere über den Umfang verteilt angeordnete und feste in dem Dorn aufgenommenen Stifte ragen radial über die Mantelfläche hervor. Diese Stifte werden in eine zylindrische Bohrung eines Werkstücks eingedrückt, um die radialen Vertiefungen zu formen.

Der Erfindung liegt die Aufgabe zugrunde, ein Werkzeug und ein Verfahren vorzuschlagen, durch welche eine kostengünstige Bearbeitung einer Vertiefung in einem Werkstück, insbesondere eine Endbearbeitung des Werkstücks auf ein Endmaß, ermöglicht ist.

Diese Aufgabe wird durch ein Werkzeug bzw. ein Verfahren mit den Merkmalen der Ansprüche 1 bzw. 13 gelöst. Vorteilhafte Ausgestaltungen des Werkzeugs bzw. des Verfahrens sind in den Unteransprüchen angegeben.

Diese Aufgabe wird durch ein Werkzeug gelöst, bei welchem ein Dorn mit einem länglichen Grundkörper vorgesehen ist, der zumindest einen gegenüber einer Mantelfläche des Grundkörpers hervorstehenden Stift aufweist, bei welchem die mit seiner Längsachse rechtwinklig zur Längsachse des Grundkörpers im Dorn angeordnet ist, wobei der Stift in einer Bohrung des Grundkörpers auswechselbar angeordnet und mit einem Klemm-, Spann- oder Befestigungselement fixiert ist und beim Einsetzen des Dorns in die Durchbrechung des Werkstücks der zumindest eine Stift in die Passfedernut an der Durchbrechung eingreift und zumindest zwei einander gegenüber liegenden Flächenabschnitte am Außenumfang des Stiftes die Vertiefung auf ein Bearbeitungsmaß oder Endmaß überführt. Durch den Stift erfolgt ein Aufweiten der Seitenfläche der Passfedernut, ohne dass eine spanabhebende Bearbeitung erforderlich ist. Die Aufweitung der Passfedernut erfolgt vorzugsweise durch eine plastische Verformung der an die Seitenflächen der Vertiefung angrenzenden Randzonen, so dass nach dem Hindurchführen des Stiftes durch die Passfedernut die dabei erzielte Aufweitung im Wesentlichen verbleibt. Darüber hinaus weist dieses Werkzeug den Vorteil auf, dass gleichzeitig eine Glättung der Seitenfläche der Passfedernut durch den Stift erfolgt, der mit einem Anpressdruck an den Seitenflächen der Passfedernut angreift, wodurch darauf folgend eine leichtere Montage der weiteren Bauteile in der Passfedernut ermöglicht ist.

Erfindungsgemäß ist der Stift mit seiner Längsachse rechtwinklig zur Längsachse des Grundkörpers im Dorn angeordnet. Dadurch kann eine einfache und kostengünstige Konstruktion geschaffen werden, um ein solches Werkzeug herzustellen. Zudem ist diese Anordnung bezüglich der Kräfte optimiert, da sich der Stift einerseits in der Bohrung abstützen kann und andererseits nur die einander gegenüber liegenden Flächenabschnitte des Stiftes Flanken oder Seitenflächen der Vertiefung aufweiten können.

Der Stift des Dorns ist auswechselbar in einer Bohrung im Grundkörper angeordnet. Dies ermöglicht eine einfache Auswechslung bei einem auftretenden Verschleiß des Pressstiftes.

Im Grundkörper des Dorns ist der Stift durch ein Klemm-, Spann- oder Befestigungselement, insbesondere durch eine Befestigungsschraube, in der Bohrung des Grundkörpers fixiert. Dadurch kann eine schnelle Auswechslung des Stiftes vorgenommen werden. Insbesondere die Befestigungsschraube oder ein Befestigungsgewindestift ermöglicht eine einfache mechanische Lösung.

Bevorzugt ist das Klemm-, Spann- oder Befestigungselement an einer Stirnfläche des Grundkörpers vorgesehen. Dadurch kann die Mantelfläche des Grundkörpers eine Anlage oder Gleitfläche während dem Durchziehen des Dorns durch die Durchbrechung im Werkstück bilden. Insbesondere ist das Klemm-, Spann- oder Befestigungselement in der Längsachse des Dorns angeordnet.

Eine alternative Ausführungsform zur Befestigung des Stiftes im Dorn sieht vor, dass das zumindest eine Klemm-, Spann- oder Befestigungselement an der Mantelfläche des Grundkörpers vorgesehen beziehungsweise durch die Mantelfläche in den Grundkörper einsetzbar ist, um den Stift in der Bohrung zu fixieren. Vorzugsweise ist das Klemm-, Spann- oder Befestigungselement radial zur Längsachse ausgerichtet. Beispielsweise kann ein Befestigungsgewindestift eingesetzt werden.

Eine erste Ausführungsform sieht vor, dass der Stift zylindrisch ausgebildet oder zumindest in seinem gegenüber dem Dorn hervorstehenden Bereich rund ausgebildet ist und vorzugsweise eine ebene Stirnfläche aufweist. Dadurch ist ein einfaches Einsetzen des Stiftes in den Dorn möglich.

Der Stift weist gemäß einer bevorzugten Ausführungsform ein erstes Paar von einander gegenüber liegenden Flächenabschnitten als Pressseite auf und zumindest ein weiteres Paar von einander gegenüber liegenden Flächenabschnitten als weitere Pressseite mit einem von dem ersten Bearbeitungsmaß abweichenden Bearbeitungsmaß aufweisen. Dieser Stift ist als ein sogenannter Wendestift ausgebildet und ermöglicht wenigstens zwei verschiedene Einstellungen. Dadurch kann mit einem Stift eine Aufweitung der Vertiefung auf zwei unterschiedliche Maße vorgesehen sein. Ein Wendestift kann auch mehrere Bearbeitungsmaße umfassen.

Zur Einstellung eines solchen Wendestiftes ist bevorzugt an einer Stirnseite des Stiftes eine Markierung vorgesehen, um eine erleichterte Einstellung für das erste oder zweite Paar der Seitenflächen zu ermöglichen. Dies kann durch eine Drehung des Stiftes in der Bohrung erfolgen, wobei nach dem Ausrichten des Stiftes durch das daran angreifende Klemm-, Spann- oder Befestigungselement, insbesondere eine Befestigungsschraube oder ein Befestigungsgewindestift, eine einfache Fixierung ermöglicht ist.

Das Bearbeitungsmaß des Stiftes weist ein Übermaß gegenüber einer oberen Toleranzgrenze eines Maßes der herzustellenden Passung der Vertiefung auf. Dadurch wird ermöglicht, dass eine Relaxation des Materials an den Seitenflächen der Vertiefung, das beim Aufweiten nicht plastisch verformt wurde, kompensiert werden kann, um das gewünschte Passmaß entsprechend der zuvor ausgewählten Passung zu erzielen.

Der Stift ist bevorzugt als Pressstift aus einem Hartmetall oder gehärteten Material ausgebildet. Dadurch kann eine erhöhte Gebrauchsdauer erzielt werden.

Der Dorn ist bevorzugt als Pressdorn ausgebildet. Dadurch kann dieses Werkzeug in einer Presse verwendet werden, um die Bearbeitung der Vertiefung in dem Werkstück vorzunehmen.

Des Weiteren weist der Grundkörper des Domes bevorzugt einen Führungsabschnitt auf, innerhalb welchem der Stift angeordnet ist und gegenüber seiner Mantelfläche hervorsteht und eine Verjüngung, die gegenüber dem Führungsabschnitt im Umfang kleiner ist. Der Dorn wird mit dem Führungsabschnitt zunächst in die Durchbrechung des Werkstücks eingesetzt, um beim Positionieren des Stiftes in der Vertiefung und beim Hindurchführen des Stiftes entlang der Vertiefung eine Gegenkraft aufzubauen. Die anschließende Verjüngung am Grundkörper des Dorns weist gegenüber dem Führungsabschnitt einen verringerten Durchmesser auf, so dass nach dem Austreten des Stiftes aus der Vertiefung ein erleichtertes Hindurchführen des Dorns durch die Durchbrechung ermöglicht ist.

Die Vertiefung im Werkstück ist bevorzugt als eine Nut ausgebildet. Hierbei kann es sich um eine keilförmige, rechteckförmige Nut oder eine Passfedernut handeln.

Die Vertiefung des zu bearbeitenden Werkstücks kann ungehärtet oder gehärtet sein. Insbesondere nach dem Härten, vorzugsweise Einsatzhärten zumindest der Vertiefung, wird das Werkstück eingesetzt, um die Vertiefung auf ein Endmaß überzuführen.

Eine weitere bevorzugte Ausführungsform der Erfindung sieht vor, dass an dem Grundkörper des Dorns mehrere Stifte mit Abstand hintereinander entlang der Längsachse des Stiftes vorgesehen sind, welche voneinander abweichende Bearbeitungsmaße aufweisen. Dabei weisen die miteinander angeordneten Stifte aufeinander abgestimmte Bearbeitungsmaße auf, die in vorbestimmten Stufen vorgesehen sind, so dass eine stufenweise Aufweitung ermöglicht ist. Gemäß einer ersten Ausführungsform können beispielsweise zwei oder mehrere Stifte in dem Dorn vorgesehen sein und beim Hindurchführen des Dorns die Durchbrechung des Werkstücks unmittelbar aufeinander folgend in die Vertiefung eingreifen. Alternativ kann jeweils einer der Stifte in dem Dorn angeordnet sein, so dass zwei oder mehrere Bearbeitungsgänge in dem jeweils nachfolgenden größeren Stift zur Aufweitung der Vertiefung vorgesehen sind.

Das Werkzeug ist bevorzugt zur Bearbeitung eines als Zahnrad ausgebildeten Werkstücks mit einer Passfedernut vorgesehen.

Diese Aufgabe wird des Weiteren durch ein Verfahren zur Bearbeitung einer Passfedernut in einem Werkstück auf ein Endmaß gelöst, bei dem ein Werkzeug mit einem Dorn auf einem länglichen Grundkörper vorgesehen ist, der zumindest ein gegenüber einer Mantelfläche des Grundkörpers hervorstehenden Stift ausweist, der beim Einsetzen des Dorns in die Durchbrechung des Werkstücks mit seinen seitlichen Flächenabschnitten in die Passfedernut eingreift und zumindest zwei einander gegenüberliegende Seitenflächen der Vertiefung auf ein Bearbeitungsmaß oder das Endmaß aufgeweitet wird.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
Figur 1 eine schematische Schnittansicht des erfindungsgemäßen Werkzeugs,
Figur 2 eine schematische Seitenansicht des Werkzeugs gemäß Figur 1,
Figur 3 eine perspektivische Ansicht des Werkzeugs mit einem Werkstück vor einer Aufweitung einer Vertiefung im Werkstück,
Figur 4 eine schematische Seitenansicht einer alternativen Ausführungsform zu den Figuren 1 und 2, und
Figuren 5a und 5b schematische Ansichten eines Wendestiftes für ein Werkzeug gemäß den Figuren 1 bis 4.

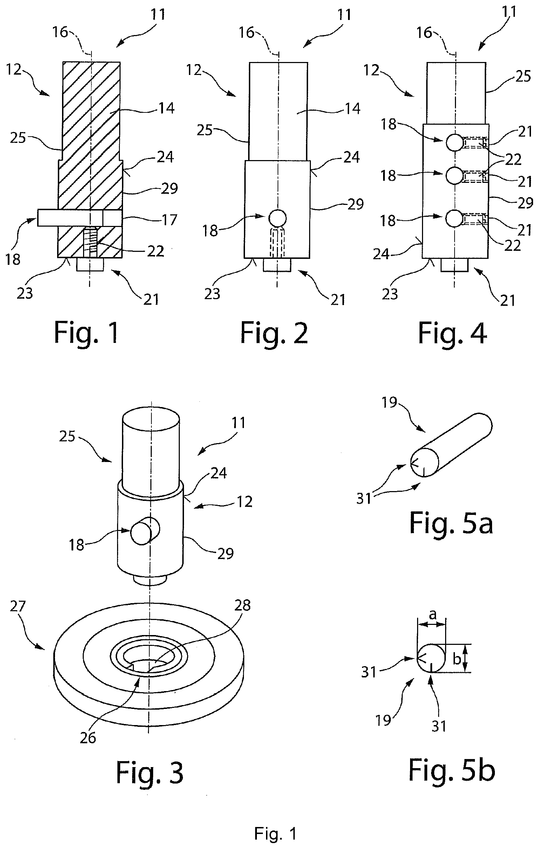

In Figur 1 ist eine schematische Schnittansicht des erfindungsgemäßen Werkzeuges 11 dargestellt. Figur 2 zeigt eine Seitenansicht von links auf das Werkzeug 11 gemäß Figur 1. Das Werkzeug 11 besteht aus einem Dorn 12, welcher einen länglichen Grundkörper 14 umfasst, der gemäß diesem Ausführungsbeispiel zylindrisch ausgebildet ist. Alternativ kann der Grundkörper auch anderweitige geometrische Grundflächen aufweisen, die an den jeweiligen Anwendungsfall beziehungsweise die Durchbrechung des zu bearbeitenden Werkstücks angepasst sein können. In dem Grundkörper 14 ist senkrecht zur Längsachse 16 eine Bohrung 17 vorgesehen, welche vorzugsweise vollständig den Grundkörper 14 durchquert. In diese Bohrung 11 ist ein Stift 18 zumindest abschnittsweise einsetzbar. Dieser Stift 18 ist vorzugsweise zylinderförmig, insbesondere rund, ausgebildet und kann auch eine rechteckförmige, keilförmige oder quadratische Geometrie aufweisen. Dieser Stift 18 wird durch ein Befestigungselement 21 in der Bohrung 17 durch Klemmung fixiert. Bevorzugt ist das Befestigungselement 21 als Befestigungs- oder Spannschraube ausgebildet, welche in eine Gewindebohrung 22 einsetzbar ist, so dass die Befestigungsschraube des Stifts 18 die Bohrung 17 fixiert. Der Durchmesser der Bohrung 17 ist geringfügig größer als der Durchmesser des Stiftes 18, so dass mehrere Stifte mit gleichem Nennmaß, aber verschiedenem Übermaß, einsetzbar sind. Die Länge des Stiftes 18, welche gegenüber einer Mantelfläche 24 des Grundkörpers 14 hervorsteht, ist abhängig von einer zu bearbeitenden Vertiefung 26 in einem Werkstück 27, welches beispielsweise in Figur 3 dargestellt ist.

Das Werkstück 27 gemäß Figur 3 weist eine Durchbrechung 28 auf, an der die Vertiefung 26 ausgebildet ist. Gemäß einem konkreten Ausführungsbeispiel kann das Werkstück 27 ein Zahnrad sein, wobei die Durchbrechung 28 eine Bohrung für eine Welle darstellt und die Vertiefung 26 als Passfedernut ausgebildet ist, die in die Durchbrechung 28 übergeht.

Der Grundkörper 14 des Dorns 12 ist bezüglich seiner Mantelfläche 24 beziehungsweise des Durchmessers an den der Durchbrechung 28 angepasst, so dass dieser mit Spiel hindurch geführt werden kann. Die Länge des Stiftes 18, welche gegenüber der Mantelfläche 14 des Dorns 12 hervorsteht, ist derart bemessen, dass die Stirnfläche des Stiftes 18 ohne Berührung an einem Grund der Vertiefung 26 entlang geführt werden kann. Der Stift 18 ist mit einem axialen Abstand zur Stirnfläche 23 des Grundkörpers 14 angeordnet, so dass der Stift 18 in die Vertiefung 26 erst dann eingreift, wenn der Dorn 12 mit seiner Mantelfläche 24 in der Durchbrechung 28 eingeführt ist. Dadurch kann ein Verkanten des Dorns 12 beim Einführen in die Durchbrechung 28 des Werkstücks 27 verhindert werden. Gemäß einer nicht dargestellten Ausführungsform kann der Dorn über seine gesamte Länge einen konstanten Durchmesser aufweisen. Bevorzugt weist der Dorn 12 in einem Bereich, in welchem der Stift 18 eingesetzt ist, einen Führungsabschnitt 29 auf, der im Wesentlichen dem Durchmesser der Durchbrechung 28 entspricht sowie eine Verjüngung 25, die im Durchmesser einen reduzierten Umfang gegenüber dem Führungsabschnitt 29 umfasst. Der Übergang zwischen dem Führungsabschnitt 29 und der Verjüngung 25 kann als Stufe ausgebildet sein. Die Verjüngung kann auch als konische Verjüngung 25 ausgebildet sein, welche absatzfrei mit dem Führungsabschnitt 29 in Verbindung steht.

Nachdem ein unterer Abschnitt des Dorns 12 in die Durchbrechung 28 des Werkstücks 27 eingesetzt ist, greift der Stift 18 mit seinen seitlichen Flächenabschnitten in die Vertiefung 26 zwangsweise ein, so dass die Nutflächen oder Seitenflächen der Vertiefung aufgeweitet werden. Der Dorn 12 wird bezogen auf die Länge der Vertiefung 26 durch die Durchbrechung 28 hindurch gedrückt, beispielsweise mit einer Presse, wodurch der Stift 18 entlang der Vertiefung 26 verfahren wird, bis dieser wieder frei kommt. Während diesem Durchführen des Stiftes 18 durch die Vertiefung 26 erfolgt nicht nur eine Aufweitung der Vertiefung 26, sondern gleichzeitig auch eine Glättung deren Seitenflächen.

Bevorzugt wird das Werkzeug 11 zur Endbearbeitung einer Passfedernut eines Zahnrades eingesetzt. Beispielsweise bei Passfedernuten mit einem Nennmaß von 6 mm und mit einem Passmaß einer Presspassung P9, welche ein Untermaß zwischen - 0,012 und - 0,042 mm aufweist, wird beispielsweise ein Passstift mit einem Übermaß, beispielsweise mit einem Durchmesser von 6,03 mm, eingesetzt. Bevorzugt liegt das Übermaß in einem Bereich zwischen 2 bis 10 µm, insbesondere 5 bis 8 µm. Die Flächenabschnitte des Stiftes 18 können sich aus der zylindrischen Geometrie des Stiftes 18 ergeben, so dass diese eher linienförmig sind. Alternativ können auch Flächen durch eine Bearbeitung, wie beispielsweise Schleifen, angebracht werden.

In Figur 4 ist eine alternative Ausführungsform zu Figur 3 dargestellt. Beispielsweise sind drei Stifte 18 in dem Grundkörper 14 angeordnet, wobei diese Stifte 18 vorzugsweise auswechselbar sind. Der unterste Stift kann eine erste Stufe der Aufweitung, der mittlere Stift eine zweite Stufe der Aufweitung und der dritte Stift eine dritte Stufe der Aufweitung bilden, so dass eine größere Aufweitung erfolgt. Zwischen jedem Stift kann eine Stufe von beispielsweise 0,1 µm, 0,2 µm usw. vorgesehen sein.

Bei dieser alternativen Ausführungsform ist auch eine alternative Befestigung des Stiftes 18 beziehungsweise der Stifte 18 in dem Grundkörper 14 dargestellt. Beispielsweise ist im Grundkörper eine sich von der Mantelfläche 24 des Grundkörpers 14 aus bis zur Längsachse 16 des Grundkörpers 14 erstreckende Gewindebohrung 22 vorgesehen, die als Radialbohrung ausgebildet ist, so dass als Befestigungselement 21 ein Gewindestift einsetzbar ist, der in der Gewindebohrung 22 vollständig verschwindet, so dass der Führungsabschnitt 29 eine glatte Mantelfläche 24 umfasst.

Diese in Figur 4 dargestellte Ausführungsform des Befestigungselementes 21 kann auch bei den Figuren 1 und 2 vorgesehen sein. Alternativ kann in Figur 4 auch für den untersten Stift 18 die Befestigung 21 gemäß den Figuren 1 und 2 vorgesehen sein.

Gemäß einem ersten Ausführungsbeispiel können alle drei Stifte in dem Grundkörper 14 des Dorns 12 verbleiben und der Dorn 12 durch die Durchbrechung 28 des Werkstücks 27 hindurch geführt werden. Ebenso kann immer nur ein Stift im Dorn 12 verbleiben, so dass die Aufweitung in drei Stufen erfolgt. Es versteht sich, dass die dreistufige Aufweitung nur beispielhaft für die Erörterung einer mehrstufigen Aufweitung der Vertiefung ist.

In den Figuren 5a und 5b sind schematische Ansichten eines Wendestiftes 19 dargestellt. Ein solcher Wendestift weist zumindest zwei Bearbeitungsmaße a, b auf, die voneinander abweichen. An einer Stirnseite des Stiftes sind vorzugsweise Markierungen 31 vorgesehen, um das entsprechende Bearbeitungsmaß a oder b einzustellen. Dadurch kann eine Reduzierung der bereit zu haltenden Stifte erfolgen, indem beispielsweise das Bearbeitungsmaß a für eine erste Passung und das Bearbeitungsmaß b für eine weitere,Passung vorgesehen ist. Alternativ können die Bearbeitungsmaße auch aufeinander abgestimmt werden, so dass dadurch eine zweistufige Aufweitung ermöglicht ist.

Die Stifte 18, 19 können bei allen vorbeschriebenen Ausführungsformen wahlweise einsetzbar sein. Aufgrund der Austauschbarkeit der Stifte 18, 19 kann der Benutzer die Auswahl und den Einsatz entsprechend wählen.

Der Einsatz eines solchen Werkstückes kann sowohl bei einer ungehärteten als auch einer weichen oder gehärteten Vertiefung erfolgen.

## Patentansprüche

1. Werkzeug zur Bearbeitung einer Passfedernut (26) in einem Werkstück (27) auf ein Endmaß, wobei die Passfedernut (26) an einer Durchbrechung (28) in dem Werkstück (27) angeordnet ist, mit einem Dorn (12), welcher einen länglichen Grundkörper (14) aufweist, der zumindest einen gegenüber einer Mantelfläche (24) des Grundkörpers (14) hervorstehenden Stift (18, 19) aufweist, der mit seiner Längsachse rechtwinklig zur Längsachse des Grundkörpers (14) im Dorn (12) angeordnet ist, **dadurch gekennzeichnet, dass** der Stift (18, 19) in einer Bohrung (17) des Grundkörpers (14) auswechselbar angeordnet ist und mit zumindest einem Klemm-, Spann- oder Befestigungselement fixiert ist und beim Einsetzen des Dorns (12) in die Durchbrechung (28) des Werkstücks (27) der zumindest eine Stift (18) in die Passfedernut (26) eingreift und mit seinen seitlichen Flächenabschnitten zumindest zwei einander gegenüber liegende Seitenflächen der Passfedernut (26) auf ein Bearbeitungsmaß (a, b) oder das Endmaß aufweitet.

2. Werkzeug nach Anspruch 1, **dadurch gekennzeichnet, dass** der Stift (18, 19) durch eine Befestigungsschraube in der Bohrung (17) fixiert ist.

3. Werkzeug nach Anspruch 2, **dadurch gekennzeichnet, dass** das zumindest eine Klemm-, Spann- oder Befestigungselement (21) an einer Stirnfläche (23) des Grundkörpers (14), vorzugsweise in der Längsachse (16) des Grundkörpers (14), vorgesehen ist, oder, dass das zumindest eine Klemm-, Spann- oder Befestigungselement (21) an der Mantelfläche (24) des Grundkörpers (14) einsetzbar und vorzugsweise radial zum Grundkörper (14) ausgerichtet ist.

4. Werkzeug nach einem der vorhergehenden Ansprüche, **dadurch gekennzeichnet, dass** der Stift (18, 19) zylindrisch ausgebildet ist.

5. Werkzeug nach einem der vorhergehenden Ansprüche, **dadurch gekennzeichnet, dass** der Stift (19) ein erstes Paar einander gegenüber liegenden Seitenflächen als Pressseiten mit einem Bearbeitungsmaß (a) und zumindest ein weiteres Paar einander gegenüber liegenden Seitenflächen als Pressseite mit einem von dem ersten Bearbeitungsmaß (a) abweichenden Bearbeitungsmaß (b) aufweist und vorzugsweise die Paare der einander gegenüber liegenden Seitenflächen durch Markierungen (31) an der Stirnseite des Stiftes (19) kenntlich gemacht sind.

6. Werkzeug nach einem der vorhergehenden Ansprüche, **dadurch gekennzeichnet, dass** das Bearbeitungsmaß (a, b) des Stiftes (18, 19) ein Übermaß gegenüber einer Obergrenze eines herzustellenden Passmaßes aufweist.

7. Werkzeug nach einem der vorhergehenden Ansprüche, **dadurch gekennzeichnet, dass** der Stift (18, 19) als Pressstift aus einem gehärteten Material oder Hartmetall besteht.

8. Werkzeug nach einem der vorhergehenden Ansprüche, **dadurch gekennzeichnet, dass** der Dorn (12) als Pressdorn ausgebildet ist.

9. Werkzeug nach einem der vorhergehenden Ansprüche, **dadurch gekennzeichnet, dass** der Dorn (12) einen Führungsabschnitt (29) aufweist, in welchem der Stift (18, 19) radial hervorsteht und daran anschließend eine Verjüngung (25) umfasst.

10. Werkzeug nach einem der vorhergehenden Ansprüche, **dadurch gekennzeichnet, dass** zumindest die Passfedernut (26) des zu bearbeitenden Werkstücks (27) ungehärtet oder gehärtet ist.

11. Werkzeug nach einem der vorhergehenden Ansprüche, **dadurch gekennzeichnet, dass** an dem Grundkörper (14) des Dorns (12) mehrere Stifte (18, 19) mit Abstand entlang der Längsachse hintereinander liegend anordenbar sind, welche voneinander abweichende Bearbeitungsmaße aufweisen.

12. Werkzeug nach einem der vorhergehenden Ansprüche, **dadurch gekennzeichnet, dass** dieses zur Bearbeitung eines Werkstücks (27) vorgesehen ist, welches ein Zahnrad mit einer Passfedernut ist

13. Verfahren zur Bearbeitung einer Passfedernut (26) in einem Werkstück (27) auf ein Endmaß, wobei die Passfedernut (26) an einer Durchbrechung (28) in dem Werkstück (27) angeordnet ist, **dadurch gekennzeichnet, dass** ein Werkzeug (11) mit einem Dorn (12) mit einem länglichen Grundkörper (14) vorgesehen ist, der zumindest einen gegenüber einer Mantelfläche (24) des Grundkörpers (14) hervorstehenden Stift (18, 19) aufweist, der beim Einsetzen des Dorns (12) in die Durchbrechung (28) des Werkstücks (27) mit seinen seitlichen Flächenabschnitten in die Passfedernut (26) eingreift und zumindest zwei einander gegenüber liegende Seitenflächen der Passfedernut (26) auf ein Bearbeitungsmaß (a, b) oder das Endmaß aufgeweitet wird.

14. Verfahren nach Anspruch 13, **dadurch gekennzeichnet, dass** der Grundkörper (14) des Dorns (12) mit seiner Mantelfläche (24) an den Durchmesser der Durchbrechung (28) des Werkstücks angepasst wird, so dass dieser mit Spiel hindurchgeführt wird.

## Claims

1. A tool for machining a feather key groove (26) in a workpiece (27) to a final dimension, said feather key groove (26) being disposed at an aperture (28) formed in the workpiece (27), said tool having a mandrel (12) which has an elongate main body (14) that has at least one dowel pin (18, 19) protruding from a lateral surface (24) of said main body (14) and arranged in such a manner within the mandrel (12) that its longitudinal axis is at a right angle relative to the longitudinal axis of the the main body (14), **characterised in that** the dowel pin (18, 19) is replaceably arranged within a hole (17) formed in the main body (14) and is fastened therein by means of at least one tensioning or clamping or fastening element, and **in that** said at least one dowel pin (18) engages with said feather key groove (26) and, using its lateral surface portions, enlarges at least two facing side faces of the feather key groove (26) to a machining dimension (a, b) or to the final dimension when the mandrel (12) is inserted into the aperture (28) of the workpiece (27).

2. The tool as claimed in claim 1, **characterised in that** the dowel pin (18, 19) is fastened within the hole (17) by means of a fastening screw.

3. The tool as claimed in claim 2, **characterised in that** the at least one tensioning or clamping or fastening element (21) is provided at an end face (23) of the main body (14), preferably coinciding with the longitudinal axis (16) of the main body (14), or **in that** the at least one tensioning or clamping or fastening element (21) may be inserted at the lateral surface (24) of the main body (14) and is preferably oriented radially with respect to the main body (14).

4. The tool as claimed in any of the preceding claims, **characterised in that** the dowel pin (18, 19) is cylindrically shaped.

5. The tool as claimed in any of the preceding claims, **characterised in that** the dowel pin (19) has a first pair of opposing side faces acting as pressure surfaces and having a machining dimension (a) and at least one further pair of opposing side faces acting as pressure surfaces and having a machining dimension (b) that differs from said first machining dimension (a), and **in that** preferably said pairs of the opposing side faces are identified by markings (31) applied on the end face of the dowel pin (19).

6. The tool as claimed in any of the preceding claims, **characterised in that** the machining dimension (a, b) of the dowel pin (18, 19) is a dimension in excess of the maximum of a fitting dimension to be realised.

7. The tool as claimed in any of the preceding claims, **characterised in that** the dowel pin (18, 19) consists of a hardened material or a hard metal.

8. The tool as claimed in any of the preceding claims, **characterised in that** the mandrel (12) is realised as a pressing mandrel.

9. The tool as claimed in any of the preceding claims, **characterised in that** the mandrel (12) has a guiding portion (29) from which the dowel pin (18, 19) radially protrudes, and comprises, adjacent thereto, a tapered portion (25).

10. The tool as claimed in any of the preceding claims, **characterised in that** at least the feather key groove (26) of the workpiece (27) to be machined is unhardened or hardened.

11. The tool as claimed in any of the preceding claims, **characterised in that** the main body (14) of the mandrel (12) has a plurality of dowel pins (18, 19) that may be disposed one behind another and spaced from one another along the longitudinal axis, said dowel pins having machining dimensions which differ from one another.

12. The tool as claimed in any of the preceding claims, **characterised in that** the latter is designed for machining a workpiece (27) which is a gear wheel having a feather key groove.

13. A method for machining a feather key groove (26) in a workpiece (27) to a final dimension, said feather key groove (26) being disposed at an aperture (28) formed in the workpiece (27), **characterised in that** a tool (11) having a mandrel (12) with an elongate main body (14) is provided that has at least one dowel pin (18, 19) protruding from a lateral surface (24) of said main body (14) which, using its lateral surface portions, engages with said feather key groove (26) and enlarges at least two facing side faces of the feather key groove (26) to a machining dimension (a, b) or to the final dimension when the mandrel (12) is inserted into the aperture (28) of the workpiece (27).

14. The method as claimed in claim 13, **characterised in that** the main body (14) of the mandrel (12) has its lateral surface (24) adjusted to the diameter of the aperture (28) in the workpiece such that it may be passed therethrough with some play.

## Revendications

1. Outil destiné à usiner une rainure de clavette (26) dans une pièce (27) jusqu'à obtenir une dimension finale donnée, la rainure de clavette (26) étant disposée au niveau d'une perforation (28) ménagée dans la pièce (27), avec une broche (12) qui présente un corps de base allongé (14) présentant au moins une tige (18, 19) qui fait saillie par rapport à une surface latérale (24) du corps de base (14) et dont l'axe longitudinal est disposé dans la broche (12) à angle droit par rapport à l'axe longitudinal du corps de base (14), **caractérisé en ce que** la tige (18, 19) est disposée de manière échangeable dans un alésage (17) du corps de base (14) et est fixée grâce à au moins un élément de blocage, de serrage ou de fixation, et **en ce que** ladite au moins une tige (18) s'engage dans la rainure de clavette (26) lorsque la broche (12) est insérée dans la perforation (28) de la pièce (27) et élargit, à l'aide de ses parties de surface latérales, au moins deux faces latérales de la rainure de clavette (26) qui se font face jusqu'à obtenir une mesure d'usinage donnée (a, b) ou la dimension finale.

2. Outil selon la revendication 1, **caractérisé en ce que** la tige (18, 19) est fixée par une vis de fixation dans l'alésage (17).

3. Outil selon la revendication 2, **caractérisé en ce que** ledit au moins un élément de blocage, de serrage ou de fixation (21) est prévu sur une face frontale (23) du corps de base (14), de préférence dans l'axe longitudinal (16) du corps de base (14), ou **en ce que** ledit au moins un élément de blocage, de serrage ou de fixation (21) peut être inséré au niveau de la surface latérale (24) du corps de base (14) et est orienté de préférence de manière radiale par rapport au corps de base (14).

4. Outil selon l'une quelconque des revendications précédentes, **caractérisé en ce que** la tige (18, 19) est réalisée de forme cylindrique.

5. Outil selon l'une quelconque des revendications précédentes, **caractérisé en ce que** la tige (19) présente une première paire de faces latérales opposées en tant que faces exerçant une pression et ayant une mesure d'usinage (a) et au moins une autre paire de faces latérales opposées en tant que faces exerçant une pression et ayant une mesure d'usinage (b) qui diffère de la première mesure d'usinage (a), et **en ce que** de préférence les paires de faces latérales opposées sont rendues reconnaissables par des marques (31) apposées sur la face frontale de la tige (19).

6. Outil selon l'une quelconque des revendications précédentes, **caractérisé en ce que** la mesure d'usinage (a, b) de la tige (18, 19) présente une cote en excès par rapport à une limite supérieure d'une cote d'ajustement à réaliser.

7. Outil selon l'une quelconque des revendications précédentes, **caractérisé en ce que** la tige (18, 19) est une tige de pression réalisée en un matériau trempé ou un métal dur.

8. Outil selon l'une quelconque des revendications précédentes, **caractérisé en ce que** la broche (12) est réalisée en tant que poinçon.

9. Outil selon l'une quelconque des revendications précédentes, **caractérisé en ce que** la broche (12) présente une partie de guidage (29) dans laquelle est placée la tige (18, 19) en dépassant de manière radiale et **en ce qu'**elle comprend, de manière contiguë à ladite partie de guidage, une partie rétrécie (25).

10. Outil selon l'une quelconque des revendications précédentes, **caractérisé en ce qu'**au moins la rainure de clavette (26) de la pièce à usiner (27) est trempée ou non-trempée.

11. Outil selon l'une quelconque des revendications précédentes, **caractérisé en ce que** plusieurs tiges (18, 19), lesquelles présentent des mesures d'usinage qui diffèrent les unes des autres, peuvent être disposées les unes derrière les autres sur le corps de base (14) de la broche (12), et ce conformément à une distance donnée le long de l'axe longitudinal.

12. Outil selon l'une quelconque des revendications précédentes, **caractérisé en ce que** ledit outil est prévu pour l'usinage d'une pièce (27) qui est une roue dentée pourvue d'une rainure de clavette.

13. Procédé destiné à usiner une rainure de clavette (26) dans une pièce (27) jusqu'à obtenir une dimension finale donnée, la rainure de clavette (26) étant disposée au niveau d'une perforation (28) ménagée dans la pièce (27), **caractérisé en ce qu'**il est prévu un outil (11) qui est équipé d'une broche (12) avec un corps de base allongé (14) qui présente au moins une tige (18, 19) qui fait saillie par rapport à une surface latérale (24) du corps de base (14) et s'engage avec ses parties de surface latérales dans la rainure de clavette (26) lorsque la broche (12) est insérée dans la perforation (28) de la pièce (27), et **en ce qu'**au moins deux faces latérales de la rainure de clavette (26) qui se font face sont élargies jusqu'à obtenir une mesure d'usinage donnée (a, b) ou la dimension finale.

14. Procédé selon la revendication 13, **caractérisé en ce que** le corps de base (14) de la broche (12) est adapté, avec sa surface latérale (24), au diamètre de la perforation (28) de la pièce de sorte qu'il passe au travers de celui-ci avec jeu.
